(19) Europäisches Patentamt
European Patent Office
Office européen des brevets

(11) **EP 2 096 507 A1**

(12) **EUROPEAN PATENT APPLICATION**
published in accordance with Art. 153(4) EPC

(43) Date of publication:
**02.09.2009 Bulletin 2009/36**

(51) Int Cl.:
**G05B 13/02** (2006.01)          **G05B 11/32** (2006.01)
**G05B 13/04** (2006.01)

(21) Application number: **07831841.7**

(22) Date of filing: **14.11.2007**

(86) International application number:
**PCT/JP2007/072111**

(87) International publication number:
**WO 2008/062700 (29.05.2008 Gazette 2008/22)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.11.2006  JP 2006313776**

(71) Applicant: **Kabushiki Kaisha Yaskawa Denki Kitakyushu-shi, Fukuoka 806-0004 (JP)**

(72) Inventors:
• **ZHANG, Wennong**
  **806-0004 Fukuoka (JP)**
• **HAGIHARA, Jun**
  **806-0004 Fukuoka (JP)**
• **ANDOH, Fukashi**
  **806-0004 Fukuoka (JP)**
• **BALOCH, Noor Aamir**
  **806-0004 Fukuoka (JP)**

(74) Representative: **Uchida, Kenji et al**
  **S.A. Fedit-Loriot et Autres**
  **Conseils en Propriété Industrielle**
  **38, avenue Hoche**
  **F-75008 Paris (FR)**

(54) **SERVO CONTROL APPARATUS AND CONTROL METHOD THEREOF**

(57)     A servo control apparatus capable of suppressing the undesirable effects of load variation and providing robust and high-speed target-command tracking performance and a control method for the servo control apparatus are provided.

The apparatus includes a reference model unit (70) which receives a target position and outputs a feedforward position command; a differentiator (73) which receives the feedforward position command; a first high-pass filter (71) which receives an output from the differentiator and outputs a feedforward speed command; an inverse system (74) of a nominal plant which receives the output from the differentiator; and a second high-pass filter (72) which receives the output from the inverse system of the nominal plant and outputs a feedforward torque command. The feedforward position command is set as a position command of the feedback system, the sum of the feedforward speed command and a speed command is set as a new speed command, and the sum of the feedforward torque command and a basic signal of a torque command is set as a new basic signal of the torque command.

Figure 1

EP 2 096 507 A1

**Description**

Technical Field

The present invention relates to a servo control apparatus which performs feedback control of a load machine in which the inertia greatly varies and a control method for the servo control apparatus.

Background Art

Recently, there has been an increasing demand for easy-to-use, high-driving-speed servo control systems for controlling industrial machines. In a general servo device, it is necessary to accurately set the total inertia of a mechanical movable section including a rotor of a motor to provide good control performance. Therefore, it is difficult to ensure both ease of use and high driving speed.

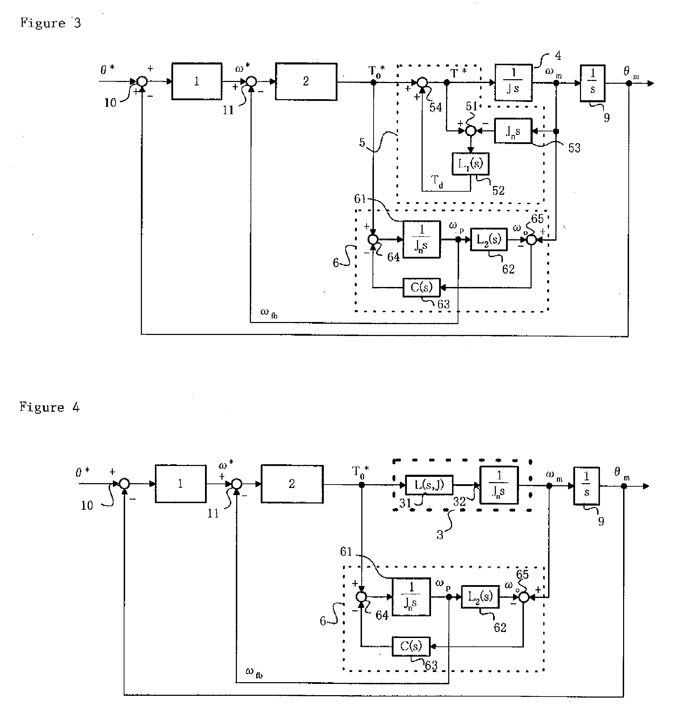

In a first example of a servo control apparatus according to the related art, a disturbance observer and a phase-lead compensation observer are combined with PI control (see, for example, Non-Patent Document 1). Fig. 3 is a block diagram illustrating the structure of the first example of the servo control apparatus according to the related art. In Fig. 3, reference numeral 4 denotes an actual plant including a rotor of a motor and a load machine, and a transfer function from a torque command to a rotational speed of the motor is shown. Reference numeral 5 denotes a disturbance observer including an inverse system 53 of a nominal plant and a first low-pass filter 52. Reference numeral 6 denotes a phase-lead compensation observer including a nominal plant 61, a second low-pass filter 62, and an observer compensator 63. In addition, reference numeral 1 denotes a position controller, 2 denotes a PI controller, and 9 denotes an integrator. Here, 0* is a target position command, $\theta_m$ is a motor position, $\omega^*$ is a speed command, $\omega_m$ is a rotational speed of the motor, $\omega_{fb}$ is a feedback speed, T* is a torque command, To* is a basic signal of the torque command, $T_d$ is a disturbance compensation torque, J is the inertia of the actual plant, $J_n$ is the inertia of the nominal plant, and s is the Laplace operator. $J_m$ and $J_M$ are the minimum value and the maximum value, respectively, of the inertia J of the actual plant.

The principle of operation of the first example of the servo control apparatus according to the related art will now be explained. For simplicity, the first low-pass filter 52 is assumed to be a first-order low-pass filter represented by Expression (1).

$$L_1(s) = \frac{1}{1 + T_1 s} \qquad (1)$$

Here, $T_1$ is the time constant of the first low-pass filter. A transfer function $G_1(S)$ from the basic signal To* of the torque command to the rotational speed $\omega_m$ of the motor is obtained as Expression (2).

$$G_1(s) = \frac{\omega_m(s)}{T_0^*(s)} = \frac{1 + T_1 s}{1 + (J/J_n)T_1 s} \cdot \frac{1}{J_n s} \qquad (2)$$

In addition, it is assumed that an equivalent low-pass filter 31 is represented by Expression (3).

$$L(s, J) = \frac{1 + T_1 s}{1 + (J/J_n)T_1 s} \qquad (3)$$

Therefore, the control system shown in Fig. 3 can be redrawn as in Fig. 4. In Fig. 4, reference numeral 3 denotes a first equivalent control object which includes the equivalent low-pass filter 31 and a nominal plant 32. In the state where the inertia J of the actual plant is at the maximum value $J_M$, which is the worst situation, the equivalent low-pass filter $L(s, J)$ can be represented by Expression (4).

$$L(s, J_M) = \frac{1 + T_1 s}{1 + (J_M / J_n) T_1 s} \tag{4}$$

In is state, the phase delay of the equivalent low-pass filter is at a maximum. Therefore, the second low-pass filter $L_2$(s) is set so as to match the equivalent low-pass filter $L(s,J)$ in this state, as in Expression (5).

$$L_2(s) = L(s, J_M) = \frac{1 + T_1 s}{1 + (J_M / J_n) T_1 s} \tag{5}$$

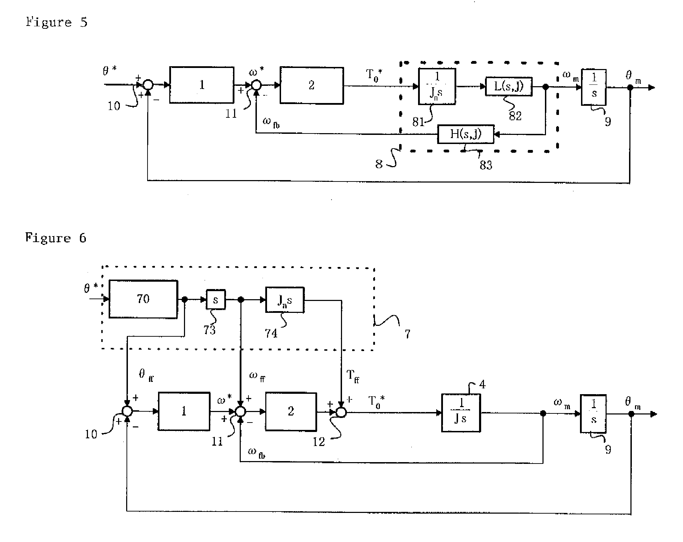

In addition, when the transfer function from $\omega_m$ to $\omega_{fb}$ is expressed as shown in Expression (6), the control system shown in Fig. 4 can be redrawn as in Fig. 5.

$$H(s, J) = \frac{\omega_{fb}(s)}{\omega_m(s)} \tag{6}$$

In addition, when the gain of the observer compensator 63 is set to a sufficiently large value, Expression (7) is satisfied:

$$\omega_o(s) \approx \omega_m(s) \tag{7}$$

Therefore, Expression (8) can be derived.

$$H(s, J) = \frac{\omega_{fb}(s)}{\omega_m(s)} \approx \frac{\omega_p(s)}{\omega_o(s)} = L_2^{-1}(s) \tag{8}$$

According to Expressions (3), (5), and (8), the phase delay at the equivalent low-pass filter $L(s,J)$ 81 is compensated for by the phase lead at the equivalent high-pass filter $H(s,J)$ 83, and problems, such as vibration and unstableness, caused by the phase delay can be eliminated. In other words, even when a load variation occurs, the stability of the control system can be ensured and the response characteristics with respect to the target command hardly vary.

In a second example of a servo control apparatus according to the related art, a feedforward signal is calculated from an output from a reference model unit and is fed to a feedback control system (see, for example, Patent Document 1). Fig. 6 is a block diagram illustrating the structure of the second example of the servo control apparatus according to the related art. In Fig. 6, components similar to those shown in Fig. 3 are denoted by the same reference numerals, and explanations thereof are thus omitted. Reference numeral 7 denotes a feedforward controller including a reference model unit 70, a differentiator 73, and an inverse system 74 of a nominal plant. In addition, $\theta_{ff}$ is a feedforward position command, $\omega_{ff}$ is a feedforward speed command, and $T_{ff}$ is a feedforward torque command.

The principle of operation of the second example of the servo control apparatus according to the related art will now be explained.

Expressions (9), (10), (11), and (12) can be obtained from Fig. 6.

$$\omega_{fb}(s) = s \cdot \theta_m(s) \tag{9}$$

$$T_o^*(s) = Js \cdot s \cdot \theta_m(s) \tag{10}$$

$$\omega_{ff}(s) = s \cdot \theta_{ff}(s) \tag{11}$$

$$T_{ff}(s) = J_n s \cdot s \cdot \theta_{ff}(s) \tag{12}$$

Assuming that the load inertia does not vary and the nominal inertia $J_n$ is equal to $J$, Expression (13) is satisfied.

$$\frac{T_{ff}(s)}{T_o^*(s)} = \frac{\omega_{ff}(s)}{\omega_m(s)} = \frac{\theta_{ff}(s)}{\theta_m(s)} \tag{13}$$

Therefore, the motor position $\theta_m$ completely tracks the feedforward position command $\theta_{ff}$ output from the reference model unit 70 irrespective of the structure of the feedback control system. Therefore, by improving the responsiveness of the reference model unit, the target-position-command tracking performance can be improved without increasing the gain of the feedback system.

Non-Patent Document 1: 2006 Annual Conference of I.E.E. of Japan, Industry Applications Society, p. II337-340
Patent Document 1: Japanese Unexamined Patent Application Publication No. 2003-241802

Disclosure of Invention

Problems to be Solved by the Invention

However, in the first example of the related art, the structure includes only the feedback system and sufficiently high-speed response characteristics cannot be obtained.

In addition, in the second example of the related art, in the case where the load inertia varies or cannot be accurately determined and the actual load inertia largely differs from the nominal inertia, the speed signal based on the feedforward torque command largely differs from the feedforward speed command. As a result, degradation of control characteristics, such as overshoot, occurs.

The present invention has been made in view of the above-described problems, and an object of the present invention is to provide a servo control apparatus including a feedforward controller suitable for a feedback control system in which a disturbance observer and a phase-lead compensation observer are combined with PI control, thereby suppressing undesirable effects of load variation and the like and achieving robust and high-speed target-command tracking performance. It is also an object of the present invention to provide a control method for the servo control apparatus.

Means for Solving the Problems

In order to achieve the above-described object, the present invention is structured as follows.

The invention of claim 1 provides a servo control apparatus which performs feedback control in which a motor and a load machine are driven on the basis of a torque command to cause a position of the preceding motor to track a target position. The servo control apparatus is provided with a position controller which calculates a speed command on the basis of a deviation of the position of the motor with respect to a position command of a feedback system, a PI controller which calculates a basic signal of the torque command on the basis of a deviation of a feedback speed with respect to the speed command, a disturbance observer which estimates a disturbance torque on the basis of the basic signal of the torque command and a rotational speed of the motor, and a phase-lead compensation observer which estimates the feedback speed, a phase of which leads a phase of the rotational speed of the motor, on the basis of the basic signal of the torque command and the rotational speed of the motor. The servo control apparatus includes a reference model unit which receives the target position and outputs a feedforward position command, a differentiator which receives the feedforward position command, a first high-pass filter which receives an output from the differentiator and outputs a feedforward speed command, an inverse system of a nominal plant which receives the output from the differentiator, and a second high-pass filter which receives an output from the inverse system of the nominal plant and outputs a feedforward torque command. The feedforward position command is set as the position command of the feedback system, the sum of the feedforward speed command and the speed command is set as a new speed command, and the sum of the feedforward torque command and the basic signal of the torque command is set as a new basic signal of the torque command.

According to the invention of claim 2, the first high-pass filter is an inverse system of the second low-pass filter.

The invention of claim 3 provides a control method for a servo control apparatus which performs feedback control in which a motor and a load machine are driven on the basis of a torque command to cause a position of the preceding motor to track a target position. The servo control apparatus is provided with a position controller which calculates a speed command on the basis of a deviation of the position of the motor with respect to a position command of a feedback system, a PI controller which calculates a basic signal of the torque command on the basis of a deviation of a feedback speed with respect to the speed command, a disturbance observer which estimates a disturbance torque on the basis of the basic signal of the torque command and a rotational speed of the motor, and a phase-lead compensation observer which estimates the feedback speed, a phase of which leads a phase of the rotational speed of the motor, on the basis of the basic signal of the torque command and the rotational speed of the motor. The control method includes a step of inputting the target position to a reference model unit and outputting a feedforward position command, a step of inputting the feedforward position command to a differentiator, a step of inputting an output from the differentiator to a first high-pass filter and outputting a feedforward speed command, a step of inputting the output from the differentiator to an inverse system of a nominal plant, a step of inputting an output from the inverse system of the nominal plant to a second high-pass filter and outputting a feedforward torque command, a step of setting the feedforward position command as the position command of the feedback system, a step of setting the sum of the feedforward speed command and the speed command as a new speed command, and a step of setting the sum of the feedforward torque command and the basic signal of the torque command as a new basic signal of the torque command.

According to the invention of claim 4, in the control method for the servo control apparatus according to claim 3, the first high-pass filter is an inverse system of the second low-pass filter.

Advantages

The present invention provides a servo control apparatus including a feedforward controller suitable for a feedback control system in which a disturbance observer and a phase-lead compensation observer are combined with PI control, thereby suppressing undesirable effects of load variation and the like and achieving robust and high-speed target-command tracking performance. The present invention also provides a control method for the servo control apparatus.

Brief Description of Drawings

[Fig. 1] Fig. 1 is a block diagram of a servo control apparatus according to an embodiment of the present invention.
[Fig. 2] Fig. 2 is a block diagram equivalent to that shown in Fig. 1.
[Fig. 3] Fig. 3 is a block diagram illustrating the structure of a first example of a servo control apparatus according to the related art.
[Fig. 4] Fig. 4 is a block diagram equivalent to that shown in Fig. 3.
[Fig. 5] Fig. 5 is a block diagram equivalent to that shown in Fig. 4.
[Fig. 6] Fig. 6 is a block diagram illustrating the structure of a second example of a servo control apparatus according to the related art.
[Fig. 7] Fig. 7 is a flowchart of a control method for the servo control apparatus according to the present invention.

Reference Numerals

10, 11: adder-subtractor
12, 54: adder
51, 64, 65: subtractor
1: position controller
2: PI controller
3: first equivalent control object
31, 82: equivalent low-pass filter
4: actual plant
5: disturbance observer
52: first low-pass filter
53, 74: inverse system of nominal plant
6: phase-lead compensation observer
32, 61, 81: nominal plant
62: second low-pass filter
63: observer compensator
7: feedforward controller
70: reference model unit
71: first high-pass filter
72: second high-pass filter
73: differentiator
8: second equivalent control object
83: equivalent high-pass filter
9: integrator

Best Mode for Carrying Out the Invention

An embodiment of the present invention will be described with reference to the drawings.

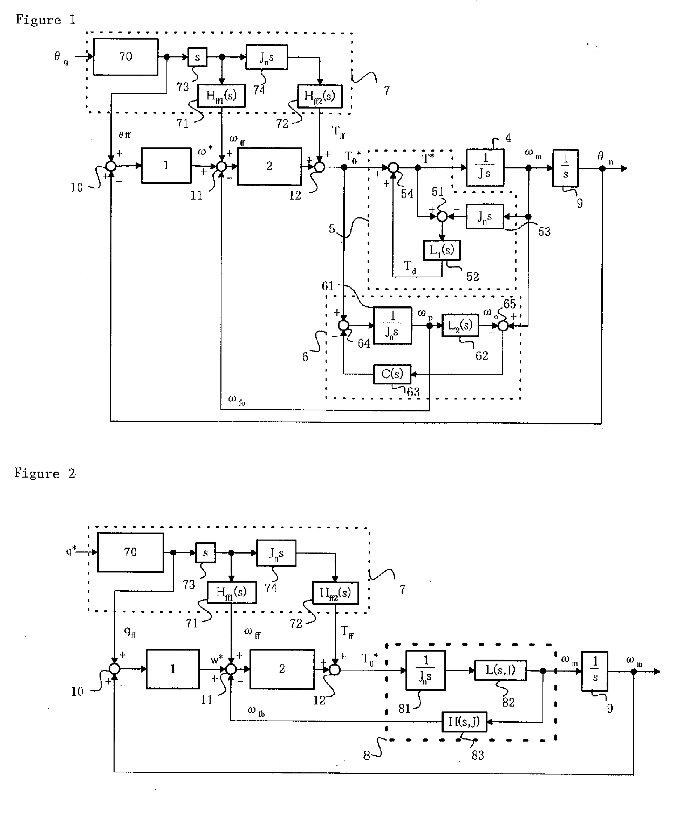

Fig. 1 is a block diagram of a servo control apparatus according to the embodiment of the present invention. In Fig. 1, components similar to those shown in Figs. 3 and 6 are denoted by the same reference numerals, and explanations thereof are thus omitted. Reference numeral 71 denotes a first high-pass filter, and 72 denotes a second high-pass filter. The present invention is obtained by adequately combining the first example of the related art with a feedforward controller obtained by improving the feedforward controller according to the second example of the related art.

The principle of operation and the structure of the servo control apparatus according to the present invention will now be explained.

A feedback controller included in the servo control apparatus according to the present invention is exactly the same as that of the first example of the related art. Therefore, for the same reason as that in the first example of the related art, the control system shown in Fig. 1 can be redrawn as in Fig. 2. In addition, Expressions (1) to (8) are satisfied. In addition, Expressions (14) to (17) can be obtained from Fig. 2.

$$\omega_{fb}(s) = H(s, J) \cdot s \cdot \theta_m(s) \tag{14}$$

$$T_o^*(s) = L^{-1}(s, J) \cdot J_n s \cdot s \cdot \theta_m(s) \tag{15}$$

$$\omega_{ff}(s) = H_{ff1}(s) \cdot s \cdot \theta_{ff}(s) \tag{16}$$

$$T_{ff}(s) = H_{ff2}(s) \cdot J_n s \cdot s \cdot \theta_{ff}(s) \tag{17}$$

In addition, Expression (18) can be derived from Expressions (14) and (16).
$$\frac{\omega_{ff}(s)}{\omega_m(s)} = \frac{H_{ff1}(s)}{H(s, J)} \cdot \frac{\theta_{ff}(s)}{\theta_m(s)} \tag{18}$$

In addition, Expression (19) can be derived from Expressions (15) and (17).
$$\frac{T_{ff}(s)}{T_o^*(s)} = H_{ff2}(s) \cdot L(s, J) \cdot \frac{\theta_{ff}(s)}{\theta_m(s)} \tag{19}$$

Therefore, to cause the motor position $\theta_m$ to track the feedforward position command $\theta_{ff}$, the first high-pass filter 71 and the second high-pass filter 72 must be set as in Expressions (20) and (21).
$$H_{ff1}(s) = H(s,J) \qquad\qquad (20)$$

$$H_{ff2}(s) = L^{-1}(s,J) \qquad\qquad (21)$$

As is clear from Expression (8), the cut frequency of the equivalent high-pass filter H(s,J) 83 is substantially constant irrespective of the load inertia J. Therefore, when the first high-pass filter 71 is set as in Expression (22), the condition of Expression (20) is satisfied.

$$H_{ff1}(s) = L_2^{-1}(s) \qquad\qquad (22)$$

In addition, as is clear from Expression (3), the cut frequency of the equivalent low-pass filter L(s,J) 82 substantially varies in inverse proportion to the load inertia J. Therefore, it is impossible to always satisfy the condition of Expression of (21) irrespective of J. Accordingly, considering the case in which the load inertia J is at the intermediate value $J_O$ of the variation range thereof, the second high-pass filter 72 is set as in Expression (23).

$$H_{ff2}(s) = L^{-1}(s,J_0) \qquad\qquad (23)$$

The torque feedforward control according to the present invention largely differs from the torque feedforward control performed in the second example of the servo control apparatus according to the related art. More specifically, even when the load inertia varies, the nominal inertia used by the feedforward controller is always equal to the inertia of the second equivalent control object 8. Therefore, the response characteristics are not disturbed by the torque feedforward control. In particular, the influence of the equivalent low-pass filter L(s,J) 82 is low unless the target position command suddenly changes.

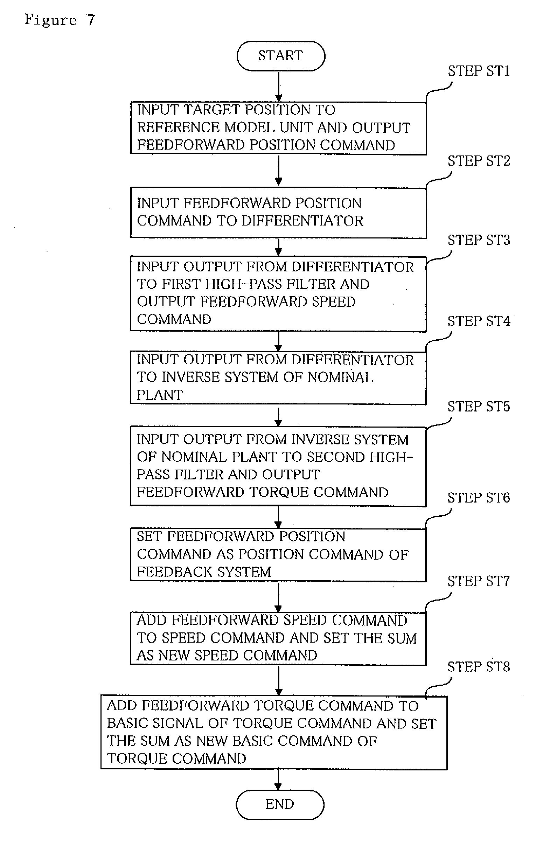

Fig. 7 is a flowchart of a control method for the servo control apparatus according to the present invention. In step ST1, the target position is input to the reference model unit and the feedforward position command is output. In step ST2, the feedforward position command is input to the differentiator. In step ST3, the output from the differentiator is input to the first high-pass filter and the feedforward speed command is output. In step ST4, the output from the differentiator is input to the inverse system of the nominal plant. In step ST5, the output from the inverse system of the nominal plant is input to the second high-pass filter and the feedforward torque command is output. In step ST6, the feedforward position command is set as the position command of the feedback system. In step ST7, the feedforward speed command is added to the speed command and the thus-obtained sum is set as a new speed command. In step ST8, the feedforward torque command is added to the basic signal of the torque command and the thus-obtained sum is set as a new basic command of the torque command.

As described above, the motor position tracks the output of the reference model unit even if the load inertia varies. Therefore, the target-position-command tracking performance of the motor position can be improved by improving the responsiveness of the reference model unit. Industrial Applicability

Robust and high-performance command tracking control can be achieved by forming a feedforward controller suitable for a feedback control system in which a disturbance observer and a phase-lead compensation observer are combined with PI control. Therefore, the present invention can be applied to achieve robust and high-speed command tracking not only in a servo system but also in a system in which the nominal plant is represented by a non-minimum phase system and in which the parameters largely vary.

**Claims**

1. A servo control apparatus which performs feedback control in which a motor and a load machine are driven on the basis of a torque command to cause a position of the preceding motor to track a target position, the servo control apparatus being provided with a position controller which calculates a speed command on the basis of a deviation of the position of the motor with respect to a position command of a feedback system, a PI controller which calculates a basic signal of the torque command on the basis of a deviation of a feedback speed with respect to the speed command, a disturbance observer which estimates a disturbance torque on the basis of the basic signal of the torque command and a rotational speed of the motor, and a phase-lead compensation observer which estimates the feedback speed, a phase of which leads a phase of the rotational speed of the motor, on the basis of the basic signal of the torque command and the rotational speed of the motor, the servo control apparatus comprising:

   a reference model unit which receives the target position and outputs a feedforward position command;
   a differentiator which receives the feedforward position command;
   a first high-pass filter which receives an output from the differentiator and outputs a feedforward speed command;
   an inverse system of a nominal plant which receives the output from the differentiator; and
   a second high-pass filter which receives an output from the inverse system of the nominal plant and outputs a feedforward torque command,

   wherein the feedforward position command is set as the position command of the feedback system, the sum of the feedforward speed command and the speed command is set as a new speed command, and the sum of the feedforward torque command and the basic signal of the torque command is set as a new basic signal of the torque command.

2. The servo control apparatus according to claim 1,
   wherein the first high-pass filter is an inverse system of the second low-pass filter.

3. A control method for a servo control apparatus which performs feedback control in which a motor and a load machine are driven on the basis of a torque command to cause a position of the preceding motor to track a target position, the servo control apparatus being provided with a position controller which calculates a speed command on the basis of a deviation of the position of the motor with respect to a position command of a feedback system, a PI controller which calculates a basic signal of the torque command on the basis of a deviation of a feedback speed with respect to the speed command, a disturbance observer which estimates a disturbance torque on the basis of the basic signal of the torque command and a rotational speed of the motor, and a phase-lead compensation observer which estimates the feedback speed, a phase of which leads a phase of the rotational speed of the motor, on the basis of the basic signal of the torque command and the rotational speed of the motor, the control method comprising:

   a step of inputting the target position to a reference model unit and outputting a feedforward position command;
   a step of inputting the feedforward position command to a differentiator;
   a step of inputting an output from the differentiator to a first high-pass filter and outputting a feedforward speed command;
   a step of inputting the output from the differentiator to an inverse system of a nominal plant;
   a step of inputting an output from the inverse system of the nominal plant to a second high-pass filter and outputting a feedforward torque command;
   a step of setting the feedforward position command as the position command of the feedback system;
   a step of setting the sum of the feedforward speed command and the speed command as a new speed command; and
   a step of setting the sum of the feedforward torque command and the basic signal of the torque command as a new basic signal of the torque command.

4. The control method for the servo control apparatus according to claim 3, wherein the first high-pass filter is an inverse system of the second low-pass filter.

Figure 1

Figure 2

Figure 3

Figure 4

Figure 5

Figure 6

Figure 7

```
                        ┌─────────────┐
                        │    START    │
                        └──────┬──────┘
                               │                              STEP ST1
        ┌──────────────────────▼──────────────────────┐
        │ INPUT TARGET POSITION TO                     │
        │ REFERENCE MODEL UNIT AND OUTPUT              │
        │ FEEDFORWARD POSITION COMMAND                 │
        └──────────────────────┬──────────────────────┘
                               │                              STEP ST2
        ┌──────────────────────▼──────────────────────┐
        │ INPUT FEEDFORWARD POSITION                   │
        │ COMMAND TO DIFFERENTIATOR                    │
        └──────────────────────┬──────────────────────┘
                               │                              STEP ST3
        ┌──────────────────────▼──────────────────────┐
        │ INPUT OUTPUT FROM DIFFERENTIATOR             │
        │ TO FIRST HIGH-PASS FILTER AND                │
        │ OUTPUT FEEDFORWARD SPEED                     │
        │ COMMAND                                      │
        └──────────────────────┬──────────────────────┘
                               │                              STEP ST4
        ┌──────────────────────▼──────────────────────┐
        │ INPUT OUTPUT FROM DIFFERENTIATOR             │
        │ TO INVERSE SYSTEM OF NOMINAL                 │
        │ PLANT                                        │
        └──────────────────────┬──────────────────────┘
                               │                              STEP ST5
        ┌──────────────────────▼──────────────────────┐
        │ INPUT OUTPUT FROM INVERSE SYSTEM             │
        │ OF NOMINAL PLANT TO SECOND HIGH-             │
        │ PASS FILTER AND OUTPUT                       │
        │ FEEDFORWARD TORQUE COMMAND                   │
        └──────────────────────┬──────────────────────┘
                               │                              STEP ST6
        ┌──────────────────────▼──────────────────────┐
        │ SET FEEDFORWARD POSITION                     │
        │ COMMAND AS POSITION COMMAND OF               │
        │ FEEDBACK SYSTEM                              │
        └──────────────────────┬──────────────────────┘
                               │                              STEP ST7
        ┌──────────────────────▼──────────────────────┐
        │ ADD FEEDFORWARD SPEED COMMAND                │
        │ TO SPEED COMMAND AND SET THE SUM             │
        │ AS NEW SPEED COMMAND                         │
        └──────────────────────┬──────────────────────┘
                               │                              STEP ST8
        ┌──────────────────────▼──────────────────────┐
        │ ADD FEEDFORWARD TORQUE COMMAND TO            │
        │ BASIC SIGNAL OF TORQUE COMMAND AND SET       │
        │ THE SUM AS NEW BASIC COMMAND OF              │
        │ TORQUE COMMAND                               │
        └──────────────────────┬──────────────────────┘
                               │
                        ┌──────▼──────┐
                        │     END     │
                        └─────────────┘
```

## INTERNATIONAL SEARCH REPORT

| International application No. |
|---|
| PCT/JP2007/072111 |

**A. CLASSIFICATION OF SUBJECT MATTER**
*G05B13/02*(2006.01)i, *G05B11/32*(2006.01)i, *G05B13/04*(2006.01)i

According to International Patent Classification (IPC) or to both national classification and IPC

**B. FIELDS SEARCHED**

Minimum documentation searched (classification system followed by classification symbols)
G05B13/02, G05B11/32, G05B13/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-267296 A  (Yaskawa Electric Corp.), 29 September, 2005 (29.09.05), Fig. 2 (Family: none) | 1-4 |
| A | JP 2004-272883 A  (Mitsubishi Electric Corp.), 30 September, 2004 (30.09.04), Par. No. [0009]; Fig. 1 (Family: none) | 1-4 |
| A | JP 08-147038 A  (Tsubakimoto Chain Co.), 07 June, 1996 (07.06.96), Fig. 1 (Family: none) | 1-4 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December, 2007 (05.12.07) | 18 December, 2007 (18.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003241802 A

**Non-patent literature cited in the description**

- 2006 Annual Conference of I.E.E. of Japan. *Industry Applications Society,* II337-340